# EUROPÄISCHE PATENTSCHRIFT

(11) **EP 0 800 234 B1**
(45) Veröffentlichungstag und Bekanntmachung des Hinweises auf die Patenterteilung: **20.01.1999**
(21) Anmeldenummer: 97890040.5
(22) Anmeldetag: 06.03.1997
(51) Int. Cl.: H01R 13/00, F16L 25/00, F16L 37/32

(54) **Steckkupplung**
Plug coupling
Raccord à fiches

(30) Priorität: 03.04.1996 AT 191/96 U
(43) Veröffentlichungstag der Anmeldung: 08.10.1997
(73) Patentinhaber: INDUSTRIEELEKTRONIK PÖLZ, 4561 Ried/Traunkreis (AT)
(72) Erfinder: Pölz, Herbert, 4501 Neuhofen (AT)
(74) Vertreter: Brauneiss, Leo, Dipl.Ing.

(56) Entgegenhaltungen:
- EP-A- 0 077 612
- DE-A- 3 215 372
- DE-U- 9 408 417
- US-A- 3 235 834
- US-A- 3 673 541

## Beschreibung

Die Erfindung bezieht sich auf eine Steckkupplung für Versorgungs- und/oder Überwachungs- und Steuerleitungen mit Steckdose und Stecker, wobei Steckdose und Stekker wenigstens drei Kupplungsstellen aus Kupplungsstiften einerseits und Kupplungshülsen anderseits bilden. Gattungsgemäße Steckkupplungen sind näher im Oberbriff von Anspruch 1 beschrieben.

Solche Steckkupplungen dienen bisher unabhängig von der Zahl ihrer Kupplungsstellen ausschließlich zur Verbindung elektrischer Leitungen, wobei die Kupplungsstellen aber durchaus unterschiedlich belegt und an Leitungen unterschiedlicher Verwendungszwecke, wie Versorgungs-, Überwachungs- und Steuerleitungen, angeschlossen sein können. Soll hingegen zusätzlich eine Druckmittelleitung, also eine Pneumatik- oder Hydraulikleitung hergestellt werden, ist als Steckkupplung eine eigene, an die jeweilige Druckmittelleitung angepaßte Schlauchkupplung vorzusehen. In Anwendungsfällen, in denen Leitungsverbindungen sowohl zwischen elektrischen Leitungen als auch zwischen Druckmittelleitungen erforderlich sind, beispielsweise für die Druckluftversorgung und Batterieladung eines in Bereitschaft abgestellten Feuerwehrfahrzeuges, erfordern daher die elektrischen Leitungen und die Druckmittelleitungen jeweils eigene Handgriffe zum Kuppeln und vor allem auch zum Entkuppeln, was gerade im kritischen Zeitpunkt vor einer einsatzbedingten Ausfahrt umständlich ist und den ganzen Einsatz verzögern kann. Abgesehen davon sind für die beiden Steckkupplungen auch jeweils eigene Kupplungsteile und Installationen erforderlich.

Gemäß der AT 399.550 B gibt es auch schon eine Steckkupplung zur Verbindung einer Druckluftleitung, welche Steckkupplung zusätzlich elektrische Kontaktpakete aufnehmen kann, so daß mit einer gemeinsamen Kupplung eine Druckmittelleitung und elektrische Leitungen kuppelbar sind. Allerdings besteht diese Steckkupplung aus einer speziellen, auf den Druckluft-Steckanschluß abgestimmten Konstruktion mit einer automatischen Auslöseeinrichtung zur Trennung der Steckverbindung, wodurch sich eine nicht mit genormten Steckkupplungen vergleichbare Sonderbauweise ergibt. Es kommt zu einem aufwendigen Kupplungsautomaten, der verhältnismäßig teuer in seiner Herstellung ist und sich vor allem für den Einsatz in Sonderfällen eignet.

Die EP- A- 0 077 612 und die US- A- 3 673541 offenbaren Steckkupplungen gemäß Oberbegriff von Anspruch 1. Die Druckmittelleitungen sind in einfachen Bohrungen angeordnet. Die EP-A-77 612 beschreibt ferner, daß ein Rückschlagventil in einer solchen Bohrung angeordnet werden kann. Zur Öffnung dieses Ventils ist ein Stift vorgesehen, der beweglich in einen Kupplungsstützen angeordnet ist. Nachteilig ist, daß die absolute Funktionstüchtigkeit nicht gewährleistet werden kann, z.B durch Verschmutzung.

Der Erfindung liegt demnach die Aufgabe zugrunde, diese Mängel zu beseitigen und eine Steckkupplung der eingangs geschilderten Art zu schaffen, die sich bei geringem Bauaufwand und einfacher Herstellbarkeit durch ihren weiten Anwendungsbereich und ihre leichte Hantierbarkeit auszeichnet.

Die Erfindung löst diese Aufgabe durch die Merkmalkombination von Anspruch 1. Eine solche Steckkupplung ist wie eine übliche Normkupplung ausgestaltet, sie ermöglicht aber mit ihrer auf eine Druckmittelleitung ausgelegten Kupplungsstelle sowohl das Kuppeln elektrischer Leitungen als auch das Kuppeln von pneumatischen oder hydraulischen Leitungen und selbstverständlich auch das gemeinsame Kuppeln von elektrischen Leitungen und Druckmittelleitungen. Dabei genügt zum Kuppeln dieser Leitungen ein einfaches Zusammenstecken von Steckdose und Stecker im üblichen Sinne und zum Entkuppeln braucht lediglich der Stecker aus der Steckdose herausgezogen zu werden, so daß sich eine solche Steckkupplung bestens für den Einsatz bei Feuerwehrfahrzeugen eignet, da hier die erforderlichen Druckluftversorgungen, Batterieladeanschlüsse, Überwachungs- und Steuerleitungen u. dgl. mit einer einzigen Steckkupplung erfaßt und auch mit einem Griff bedient werden können. Selbstverständlich läßt sich diese Steckkupplung aber allgemein zur Versorgung beliebiger Fahrzeuge, Anhänger, Container oder anderer Einrichtungen und Geräten verwenden. Die mit einem Rückschlagventil ausgestattete Kupplungshülse verhindert trotz einer Druckmittelbeaufschlagung ein vorzeitiges Ausströmen des Druckmittels, welches Rückschlagventil durch das Zusammenstecken von Kupplungsstift und Kupplungshülse geöffnet wird und damit den Durchfluß für das Druckmittel freigibt. Die eigentliche Ausgestaltung des Ventils, sei es als Kugel- oder Klappenventil od. dgl., spielt dabei grundsätzlich keine Rolle.

An sich genügt die Ventilbestückung der Kupplungshülse, doch vorteilhafterweise ist auch der Kupplungsstift mit einem seine Axialbohrung im Ausströmsinn sperrenden Rückschlagventil ausgestattet, wodurch nicht nur die Sicherheit erhöht wird, sondern der Kupplungseinsatz auch von einer Ventilausrüstung des steckdosenseitigen Fahrzeuges od. dgl. unabhängig bleibt.

Da die erfindungsgemäße Steckkupplung durchaus mit einer üblichen genormten Steckkupplung vergleichbar ist, läßt sich grundsätzlich auch eine solche Normkupplung auf rationelle Weise zu einer erfindungsgemäßen Steckkupplung umrüsten, was zu einer besonders wirtschaftlichen Fertigung dieser Steckkupplungen führt. Vor allem für den Feuerwehreinsatz eignet sich dabei eine Fahrzeug-Steckkupplung zur elektrischen Verbindung zwischen Zug- und Anhängefahrzeugen mit vorzugsweise sieben elektrischen Kontakten aus Kontaktstiften einerseits und Kontakthülsen anderseits, von welchen Kontakten der größer bemessene Kontakt für die Masseleitung durch eine Kupplungsstelle zur Kupplung einer Druckmittelleitung ersetzt ist, wobei der Kupplungsstift bzw. die Kupplungshülse der Kupplungsstelle die gleichen Einbaumaße wie der Kontaktstift bzw. die Kontakthülse des Massekontaktes besitzen. Diese genormten Fahrzeug-Steckkupplungen für elektrische 24 Volt-Ausrüstungen weisen einen gegenüber den anderen Kontakten vergrößerten Massekontakt auf, damit nicht ungewollt der Massekontakt mit einem anderen elektrischen Kontakt zusammengesteckt werden kann. Diese vergrößerte Kontaktstelle läßt sich bei gleichen Abmessungen einfach durch axial durchbohrte Kupplungsstifte bzw. Kupplungshülsen zum Kuppeln von Druckmittelleitungen ersetzen, so daß aus dieser üblichen 24 Volt-Normsteckkupplung mit geringstem Umbauaufwand eine erfindungsgemäße Steckkupplung entsteht, wobei außerdem bei einem versehentlichen Kombinieren der Steckdosen bzw. des Steckers dieser Kupplung mit dem zugehörenden Teil einer üblichen elektrischen Kupplung der Kupplungsteil für die Druckmittelleitung mit dem Massekontaktteil zusammengesteckt wird, was gefahrlos ist und zu keinen Schäden führt.

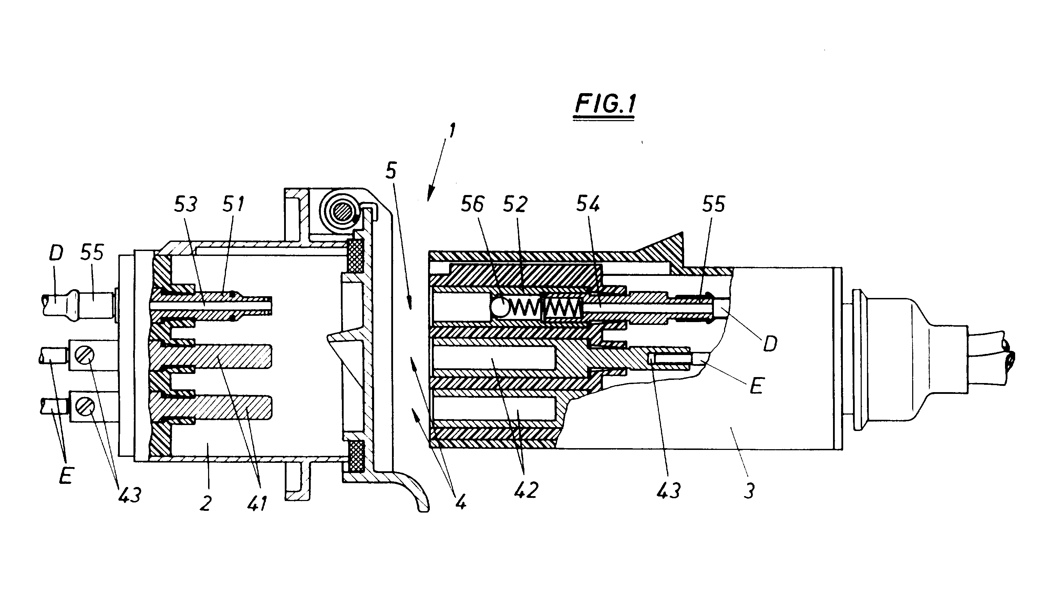

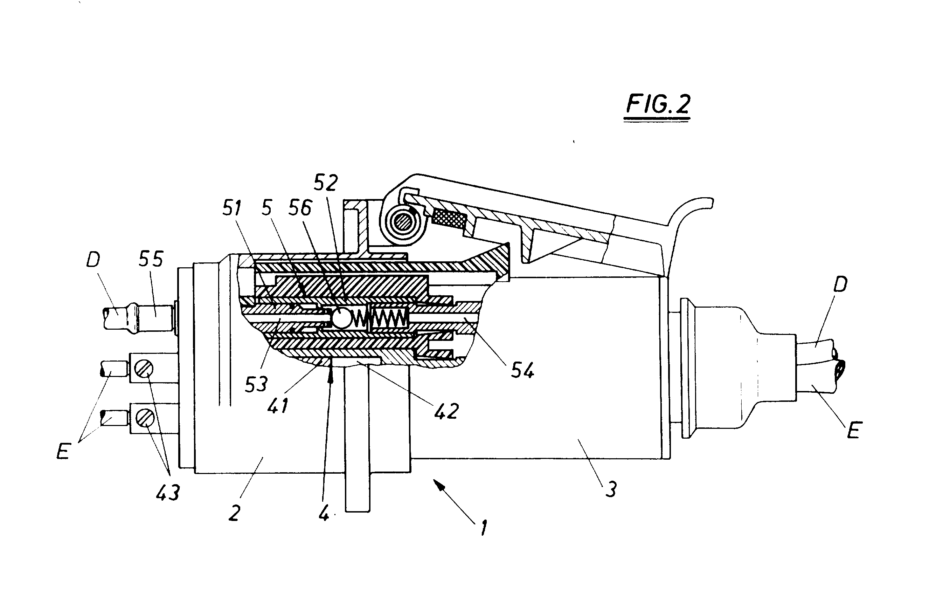

In der Zeichnung ist der Erfindungsgegenstand beispielsweise veranschaulicht, und zwar zeigen
Fig. 1 und 2 eine erfindungsgemäße Steckkupplung mit entkuppelten bzw. gekuppelten Teilen jeweils in teilgeschnittener Seitenansicht.

Eine Steckkupplung 1 zur Leitungsverbindung von elektrischen Leitungen E und einer Druckmittelleitung D umfaßt eine Steckdose 2 und einen Stecker 3 mit mehreren Kupplungsstellen 4, 5 aus Kupplungsstiften 41, 51 einerseits und Kupplungshülsen 42, 52 anderseits. Die Kupplungsstifte 41 und Kupplungshülsen 42 sind mit Klemmen 43 an die elektrische Leitung E angeschlossen und bilden elektrische Kontakte, die Kupplungshülse 51 und der Kupplungsstift 52 hingegen weisen eine Axialbohrung 53, 54 auf und sind über endseitige Schlauchanschlüsse 55 an der Druckmittelleitung D angesetzt, so daß sie eine Schlauchkupplung für die Druckmittelleitung D ergeben. Die Kupplungshülse 52 ist weiters mit einem Kugelventil als Rückschlagventil 56 ausgestattet, das beim Kuppeln durch den eindringenden Kupplungsstift 51 aufgedrückt wird und den Durchfluß des Druckmittels durch die Steckkupplung freigibt, und auch der Kupplungsstift 51 selbst weist gegebenenfalls im Bereich des Schlauchanschlußstutzens ein Rückschlagventil auf.

Ist der Stecker 3 von der Steckdose 2 abgezogen, sind die elektrischen Kontakte der Kupplungsstellen 4 und auch die Druckmittel kupplung der Kupplungsstelle 5 unterbrochen, wobei die Rückschlagventile ein Ausströmen des Druckmittels aus der Druckmittelleitung D verhindern (Fig. 1). Wird der Stecker 3 in die Steckdose 2 eingesteckt, dringen die Kupplungsstifte 41, 51 in die zugehörigen Kupplungshülsen 42, 52 ein, so daß einerseits die elektrischen Kontakte geschlossen werden und eine elektrische Versorgung durch die elektrischen Leitungen E erfolgen kann und anderseits durch das aufgedrückte Rückschlagventil 56 die Kupplungsstelle 5 für einen freien Druckmitteldurchfluß geöffnet und auch die Druckmittelversorgung sichergestellt ist (Fig. 2). So läßt sich beispielsweise mit einem gemeinsamen Stecker im Feuerwehrbetrieb ein in Bereitschaft abgestelltes Feuerwehrfahrzeug sowohl zur Batterieaufladung an ein Ladegeräte als auch zur Luftversorgung an einen Kompressor od. dgl. anschließen, wobei das Abziehen des Steckers sofort alle Leitungsverbindungen ordnungsgemäß unterbricht.

## Patentansprüche

1. Steckkupplung für Versorgungs- und/oder Überwachungs- und Steuerleitungen (E,D) mit Steckdose (2) und Stecker (3), wobei Steckdose (2) und Stecker (3) wenigstens drei Kupplungsstellen (4,5) aus Kupplungsstiften (41,51) einerseits und Kupplungshülsen (42,52) anderseits bilden, wobei neben den Kupplungsstellen (4) zur Kupplung elektrischer Leitungen (E) eine Kupplungsstelle (5) zur Kupplung einer Druckmittelleitung (D) vorgesehen ist und der Kupplungsstift (51) und die Kupplungshülse (52) dieser Kupplungsstelle (5) Axialbohrungen (53,54) und endseitige Schlauchanschlüsse (55) aufweisen, dadurch gekennzeichnet, daß in der Axialbohrung (53) der Kupplungshülse (52) ein Rückschlagventil (56) angeordnet und von dem in die Kupplungshülse (52) eindringenden Kupplungsstift (51) aufdrückbar ist.

2. Steckkupplung nach anspruch 1, dadurch gekennzeichnet, daß der Kupplungsstift (51) mit einem seine Axialbohrung (53) im Ausströmsinn sperrenden Rückschlagventil ausgestattet ist.

3. Steckkupplung nach Anspruch 1 oder 2, dadurch gekennzeichnet, daß die Kupplungshülse (52) mit einem als Kugel- oder Klappenventil ausgebildeten Rückschlagventil (56) ausgestattet ist, das beim Kuppeln durch den eindringenden Kupplungsstift (51) aufdrückbar ist.

4. Steckkupplung nach Anspruch 3, dadurch gekennzeichnet, daß der vordere Endbereich des Kupplungsstiftes (51) durch den Ventilsitz des als Kugelventil ausgebildeten Rückschlagventiles (56) durchsteckbar ist.

5. Steckkupplung nach Anspruch 3 oder 4, dadurch gekennzeichnet, daß der Kupplungsstift (51) mit seinem vorderen Ende an die Kugel des Rückschlagventiles (56) anlegbar ist.

6. Steckkupplung nach einem der Ansprüche 1 bis 5, dadurch gekennzeichnet, daß zur Erstellung einer Fahrzeug-Steckkupplung, vorzugsweise für die Druckluftversorgung und die Batterieladung eines in Bereitschaft abgestellten Feuerwehrfahrzeuges, eine zur elektrischen Verbindung zwischen Zug- und Anhängefahrzeugen dienende, mit vorzugsweise sieben elektrischen Kupplungsstellen aus Kupplungsstiften einerseits und Kupplungshülsen anderseits ausgerüstete, Norm-Fahrzeug-Steckkupplung anstelle der größer bemessenen Kupplungsstelle für die Masseleitung eine Kupplungsstelle zur Kupplung einer Druckmittelleitung (D) vorgesehen ist und der Kupplungsstift (51) bzw. die Kupplungshülse (52) der Kupplungsstelle für die Druckmittelleitung (D) die gleichen Einbaumaße wie der Kupplungsstift (41) bzw. die Kupplungshülse (42) der Kupplungsstelle für die Masseleitung besitzen.

## Claims

1. A plug coupling for supply lines and/or monitoring and control lines (E, D) having a socket (2) and a plug (3), wherein socket (2) and plug (3) form at least three coupling points (4, 5) consisting of coupling pins (41, 51) on the one hand and coupling sleeves (42, 52) on the other hand, wherein, apart from the coupling points (4) for coupling electrical lines (E), a coupling point (5) is provided for coupling a pressure medium line (D) and the coupling pin (51) and the coupling sleeve (52) of this coupling point (5) comprise axial bores (53, 54) and terminal hose connections (55),
**characterised in that** a non-return valve (56) is disposed in the axial bore (53) of the coupling sleeve (52) and can be pressed open by the coupling pin (51) penetrating into the coupling sleeve (52).

2. A plug coupling according to Claim 1,
**characterised in that** the coupling pin (51) is equipped with a non-return valve blocking its axial bore (53) in the discharge direction.

3. A plug coupling according to Claim 1 or 2,
**characterised in that** the coupling sleeve (52) is equipped with a non-return valve (56) constructed as a ball or flap valve, which during coupling can be pressed open by the penetrating coupling pin (51).

4. A plug coupling according to Claim 3,
**characterised in that** the front end region of the coupling pin (51) can be pushed through the valve seat of the non-return valve (56) constructed as a ball valve.

5. A plug coupling according to Claim 3 or 4,
**characterised in that** the coupling pin (51) can be placed by its front end against the ball of the non-return valve (56).

6. A plug coupling according to one of Claims 1 to 5,
**characterised in that** in order to provide a vehicle plug coupling, preferably for the compressed air supply and the battery charging of a fire service vehicle on standby, a standardised vehicle plug coupling, which serves for the electrical connection between towing and towed vehicles and is preferably equipped with seven electrical coupling points consisting of coupling pins on the one hand and coupling sleeves on the other hand, is provided with a coupling point for coupling a pressure medium line (D) instead of the larger-dimensioned coupling point for the earth line, and the coupling pin (51) and the coupling sleeve (52) respectively of the coupling point for the pressure medium line (D) possess the same assembly dimensions as the coupling pin (41) and the coupling sleeve (42) respectively of the coupling point for the earth line.

## Revendications

1. Raccord à fiches pour des conduits d'alimentation et/ou de surveillance et de contrôle (E,D) comprenant une prise femelle (2) et une unité de fiches mâles (3), la prise femelle (2) et la unité de fiches mâles (3) formant au moins trois points de raccordement (4,5), qui consistent d'une part de fiches de couplage (41, 51) et d'autre part de cosses de couplage (42,52), un point de raccordement (5) étant prévu pour le couplage d'un conduit pour un fluide comprimé (D) outre les points de raccordement (4) pour la couplage de lignes électriques (E), et la fiche de couplage (51) ainsi que la cosse de couplage (52) de ce point de raccordement (5) présentant des perçages axiaux (53,54) et des raccords de tuyau (55) aux côtés de ses extrémités, caractérisé en ce qu'une soupape de non-retour (56) est disposée dans le perçage (53) axial de la cosse de couplage (52) et est susceptible d'être ouverte par la fiche de couplage (51) en poussant à ladite soupape quand la fiche pénètre dans la cosse de couplage (52).

2. Raccord à fiches selon la revendication 1, caractérisé en ce que la fiche de couplage (51) est prévue d'une soupape de non-retour bloquant son perçage axial (53) en direction d'écoulement.

3. Raccord à fiches selon la revendication 1 ou 2, caractérisé en ce que la cosse de couplage (52) est prévue d'une soupape de non-retour (56) formée par une soupape sphérique ou soupape à clapet, qui est susceptible d'être ouverte par la fiche de couplage (51) pénétrante en poussant à ladite soupape lors du couplage.

4. Raccord à fiches selon la revendication 3, caractérisé en ce que l'endroit de l'extrémité frontale de la fiche de couplage (51) est susceptible de traverser le siège de soupape de la soupape de non-retour (56) formée par une soupape sphérique.

5. Raccord à fiches selon la revendication 3 ou 4, caractérisé en ce que l'extrémité frontale de la fiche de couplage (51) est susceptible de s'appuyer à la bille de la soupape de non-retour (56).

6. Raccord à fiches selon une des revendications 1 à 5 quelconque, caractérisé en ce qu'en vue d'établir un raccord à fiches véhiculaire, de préférence pour l'alimentation en air comprimé et pour le chargement d'accumulateurs d'un fourgon-pompe arrêté en attente, un raccord à fiches véhiculaire de norme servant pour le raccordement électrique entre des véhicules de traction et des remorques est prévu, équipé des points de raccordement électriques, qui consistent d'une part de, préférablement sept, fiches de couplage et d'autre part de cosses de couplage, un point de couplage pour le couplage d'un conduit d'un fluide comprimé (D) étant prévu au lieu du point de couplage plus grand pour le fil de masse, et que la fiche de couplage (51) et la cosse de couplage (52) du point de couplage pour le conduit d'un fluide comprimé (D) ont les mêmes dimensions comme la fiche de couplage (41) et la cosse de couplage (42) du point de couplage pour le fil de masse.
